# EUROPEAN PATENT SPECIFICATION

(11) **EP 2 301 868 B1**
(45) Date of publication and mention of the grant of the patent: **12.08.2015**
(21) Application number: 10177379.4
(22) Date of filing: 17.09.2010
(51) Int. Cl.: B25J 5/02, B25J 15/00, B25J 15/06, B65G 49/06

(54) **APPARATUS FOR HANDLING GLASS SHEETS AND ASSOCIATED METHODS**
VORRICHTUNG ZUR BEHANDELUNG VON GLASSCHEIBEN UND DAZU GEHÖRENDE VERFAHREN
APPAREIL DE MANIPULATION DE FEUILLES DE VERRE ET PROCÉDÉS ASSOCIÉS

(30) Priority: 24.09.2009 IT MI20091634
(43) Date of publication of application: 30.03.2011
(73) Proprietor: Officine Mistrello S.r.l., 35040 Ponso (Padova) (IT)
(72) Inventor: Mistrello, Marco, 35040 Ponso (PD) (IT); Aldegheri, Matteo, 35045 Ospedaletto Euganeo (PD) (IT)
(74) Representative: Perani, Aurelio

(56) References cited:
- EP-A1- 1 695 928
- EP-A1- 2 070 848
- FR-A1- 2 012 911
- US-A1- 2001 028 837
- US-A1- 2006 043 747

## Description

The present invention relates to an apparatus for handling glass sheets, preferably large flat glass sheets.

In another aspect, the present invention also concerns a method for picking up glass sheets, as well as a method for laying down glass sheets.

Such type of apparatus is used in industrial factories or warehouses for handling flat glass sheets, e.g. for transferring the sheets from warehouse areas to cutting stations and/or for picking up the cut sheets from the cutting stations to carry them to storage areas.

Glass sheets are generally produced in standard 6000x3210 sizes, with thicknesses ranging from 2 to 22 mm, and are arranged in sheet packs and stored edgewise on stands or racks slightly inclined to the vertical. Each pack has at least one first sheet providing front access for the apparatus to pick it up.

Prior art sheet handling apparatus comprise a frame having a comb-like structure that can move relative to sheet support means, in which each post of the frame has a plurality of suction cups mounted thereto, for engaging and removably holding a sheet, which suction cups also define a pick-up surface. The apparatus can move within industrial factories using special motor-driven means cooperating with overhead or floor-mounted rails in warehouses.

It shall be noted that, referring to the steps of picking up and/or laying down the sheets, prior art apparatus encounter difficulties, which cause sheet handling errors.

For instance, sheet supporting means are known to be subjected to changes in their inclination, proportional to the number of sheets stored thereon. Inclination changes are caused by the differences in the load stress exerted on the stand as the number of sheets to be supported increases or decreases. In view of the above and referring for instance to the sheet pick-up process, all the suction cups are required to adhere to the surface of the sheet, and the pick-up surface defined by the suction cups is required to be as parallel as possible to the surface of the sheet to be picked up. As a result, the frame shall be oriented according to the orientation of the sheet to be picked up. A few centimeter offset as the apparatus comes close would cause some suction cups to be placed forward relative to others. This placement would expose the sheets to the risk of breaking because, as the frame comes close to the sheet, it would exert a greater force in certain points of the sheet surface than in others.

In an attempt to obviate the above drawbacks, prior art sheet handling apparatus are equipped with a large number of position sensors (e.g. photocells) mounted to the apparatus and typically connected to processing systems (e.g. PLC) so that both the inclination of the sheet to be picked up and the position at each instant of the apparatus relative to the sheet to be picked up are determined prior to each pick-up operation.

While this solution allows the frame, and more particularly the pick-up surface, to be oriented parallel to the surface of the sheet to be picked up, this solution has the drawback of requiring large amounts of position sensors for the inclination of the sheet to be picked up prior to each pick-up operation.

Conversely, referring to the sheet lay-down process, in order that the sheet carried by the apparatus may be accurately laid down on the support means, prior art apparatus perform an idle approaching step (i.e. with no sheet held thereby) against the support means to allow position sensors to accurately determine the position of the support means or the outermost sheet stored thereon.

Document EP 2070848 discloses an apparatus for handling large flat glass sheets stored in stands and having removal means designed to remove spacers on glass sheets. The removal means are directly mounted to the frame of the apparatus with drive means for operating them. In order to handle glass sheets, the apparatus comprises a single post with a plurality of fixed gripper means. This solution however has the drawback of not precisely handle the glass sheets according to different inclination of stands.

Document US 2001/0028837 discloses an apparatus for handling large flat glass sheets with a first and a second post connected each other. In particular, the second post is supported by the first post by hinge means for connecting the upper portion of the second post to the lower portion of the first post. The second post can rotate with respect to the first post so that the two posts can be bundled between them so that the apparatus can also pick up small glass sheets.

Document US 2006/0043747 discloses a frame for handling curved, angled or uneven small glass sheets, for example automotive glass sheets stored in horizontal stands. The frame comprises gripper means which can rotate in order to fit to the shape of the curved glass sheets. These types of frames are however configured for handling only small glass sheets.

Document FR 2012911 discloses an apparatus for handling sheets.

Nevertheless, such solution affects lay-down efficiency, because the idle approaching step of the apparatus against the support means increases the time required for sheet handling.

In view of the above, the need arises for an apparatus for handling glass sheets that can quickly and easily simply pick up and/or lay down sheets.

The object of the present invention is to provide an apparatus for handling glass sheets that has such structural and functional features as to fulfill the above needs, while obviating the drawbacks of prior art.

This object is fulfilled by an apparatus for handling glass sheets as defined in claim 1.

In another aspect, the invention relates to a method for picking up glass sheets as defined in claim 10, as well as a method for laying down glass sheets as defined in claim 11.

Further characteristics and advantages of the apparatus for handling glass sheets and method of the present invention will be apparent from the following description of preferred embodiments thereof, which are given by way of illustration and without limitation with reference to the accompanying figures, in which:
- Figure 1 is a front view of a first embodiment of the apparatus of the present invention,
- Figures 2 to 7 are side views of the apparatus of Figure 1 during the front sheet pick-up steps,
- Figures 8 to 12 are side views of the apparatus of Figure 1 during the front sheet lay-down steps,
- Figures 13 to 16 are side views of the apparatus of Figure 1 during the rear sheet pick-up steps,
- Figures 18a and 18b show a suction cup adhering to a sheet in first and second operating configurations respectively,
- Figures 19 to 22 are side views of the apparatus of Figure 1 during the rear sheet lay-down steps,

Referring to the accompanying figures, numeral 1 generally designates an apparatus for handling glass sheets 3, preferably for large glass sheets, particularly for flat sheets. Nevertheless, the apparatus of the present invention might be used for handling sheets, slabs or plates made of other materials, such as rock materials (basalt, granite, marble) or wood, metal, ceramics or plastics.

As used herein, the term "large glass sheet" is intended to designate a sheet having a surface area of at least 1 square meter.

It shall be noted that glass sheets may be typically stored in packs supported by special support means 6, usually known as stands, before being conveyed to subsequent processing stations (e.g. sheet cutting stations) in an industrial plant.

These support means 6 may include known magazines that are typically used in the field, also known as racks. Nevertheless, the support means 6 might be also embodied by a truck that carries the sheets to the factory.

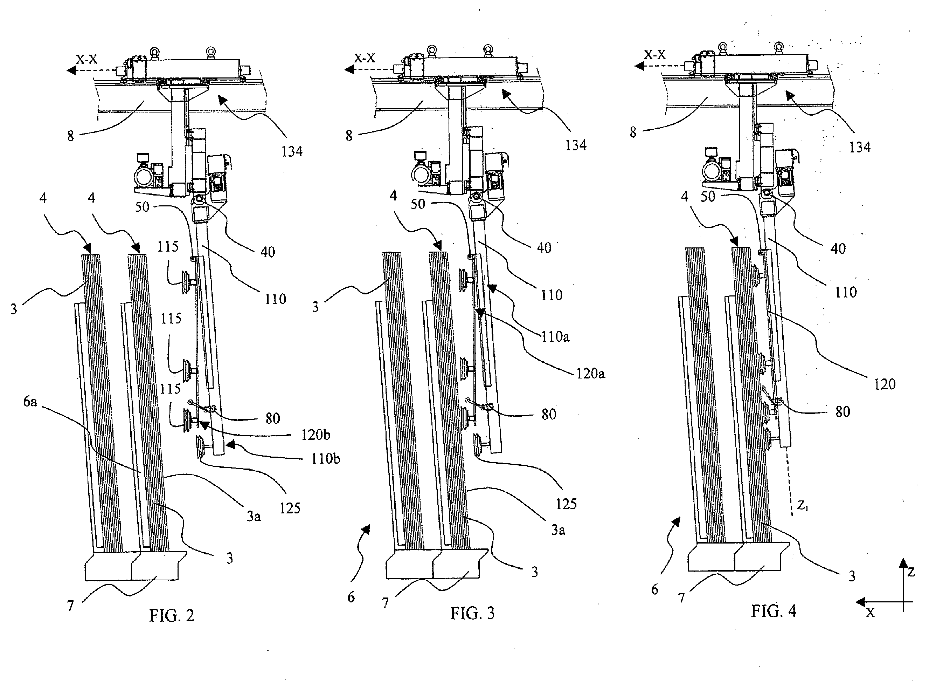

Figures 2 to 12 show a traditional stands 6 for sheets 3, with a back 6a slightly inclined to the vertical and a carriage 7 sliding on rails 54 (not shown). These components will not be further described herein, as they are known per se in the art. The pack 4 of sheets 3 is supported by the stand 6 and exhibits an outermost sheet 3a to be handled.

The apparatus 1 comprises a frame 100 that moves relative to the support means 6. The frame 100 has at least one first post 110 extending in a longitudinal direction, designated in the figures by Z₁.

In one embodiment, the frame 100 has a crossbar 105 with the first post 110 projecting therefrom.

In one embodiment of the invention, the free end of the first post 110 is located below the crossbar 105.

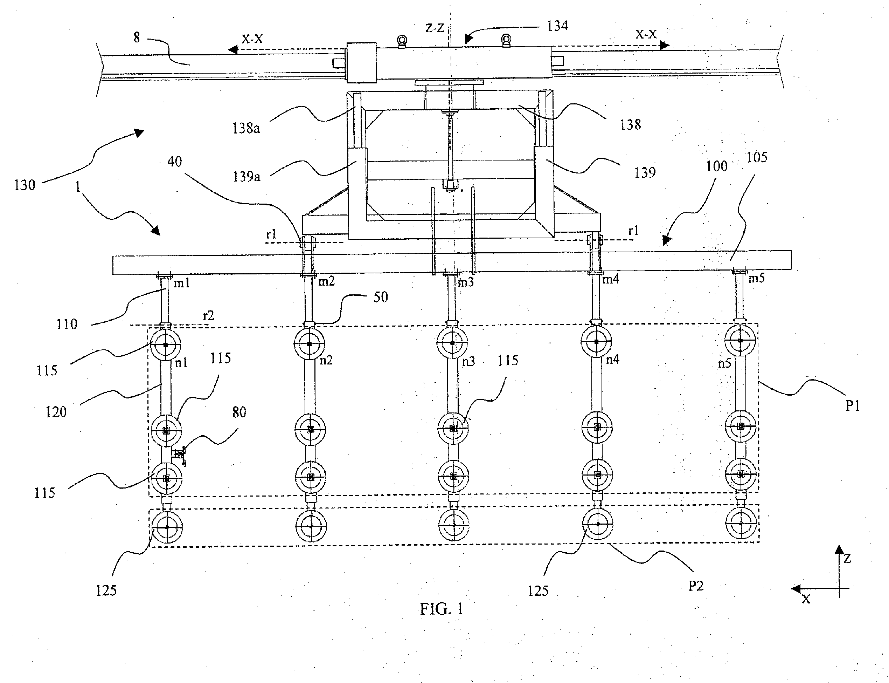

As shown in the example of Figure 1, the frame 100 comprises a plurality of first posts 110 extending from the crossbar 105 in comb-like arrangement. In one embodiment, the comb-like arrangement is directed downwards.

The comb-like configuration of the frame 100 allows the apparatus 1 to cooperate with prior art support devices which have a mating upwardly open comb-like structure, such as a known comb-like tilt table. By interleaving the tilt table and the comb-like frame 100, the glass sheet may be transferred by always handling it from the same side. This is particularly important when handling glass, e.g. low-emissivity glass sheets, in which one face is required to be unaffected by the sheet handling process.

In one embodiment of the invention, the first posts 110 extend transversely from the crossbar 105.

In order to set the position of the frame 100 against the larger surface of the sheet 3, the apparatus 1 comprises handling means 130 for handling and orienting the frame 100.

In one embodiment, the handling means 130 include a motor-driven carriage 134 which slides on rails 8 installed in the warehouse and extending in a direction of extension X-X of the warehouse.

The apparatus comprises motor means for moving the motor-driven carriage 134, which are formed as is known in the art.

The motor-driven carriage 134 is adapted to translate the frame 100 in a translation direction X-X substantially parallel to the direction of extension X-X of the warehouse.

In one embodiment, not shown, the rail 8 is movably supported by one or more tracks through motor-driven translation means, which allow further translation of the apparatus 1 in a direction Y-Y perpendicular to the direction of extension X-X of the warehouse.

As used herein and in the accompanying claims, the term vertical direction Z-Z will designate a direction substantially orthogonal to the plane of the warehouse in which the apparatus 100 is installed.

In the first embodiment, as shown in Figure 1, the motor-driven carriage 134 supports the frame 100 allowing it to rotate about the axis Z-Z, by an inverted U-shaped subframe 138. An additional subframe 139 may vertically slide on the subframe 138. Particularly, the vertical portions 138a of the subframe 138 may slide on the vertical portions 139a of the subframe 139. This allows vertical motion of the frame 100 with the sheet pick-up means thereon.

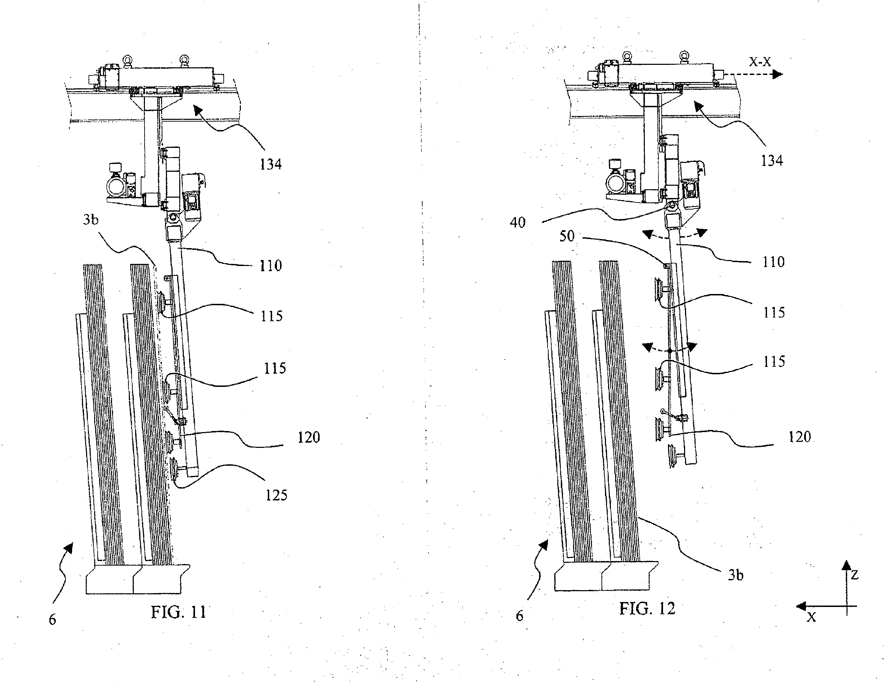

As shown in the example of Figure 12, the frame 10 is able to pivot about an axis of rotation r1 substantially parallel to the direction of translation X-X. The crossbar 105 of the frame 100 is hinged to the subframe 138 by first hinge means 40 having a substantially horizontal axis. Preferably, the hinge means 40 have actuator means for moving the frame 100 about the axis of rotation r1.

In one embodiment, the apparatus 1 comprises a second post 120 supported by the first post 110. The second post 120 comprises first gripper means 115 which are designed to engage and releasably hold the sheet 3.

The first gripper means 115 are supported by the second post 120.

In one embodiment, the first 110 comprises second gripper means 125 which define a second pick-up surface P2 and are designed to engage and releasably hold the sheet 3.

The second gripper means 125 are supported by the first post 110.

It shall be noted that the first 115 and second gripper means 125 comprise at least one suction cup. Preferably, the suction cups are vacuum suction cups formed as is known in the art.

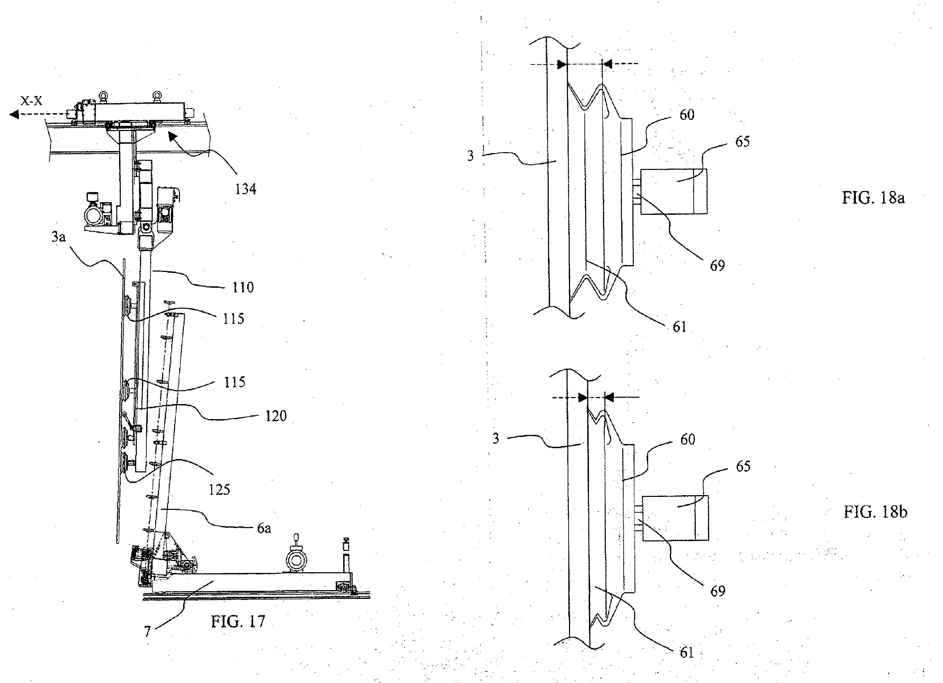

The examples of Figure 18a, 18b show a suction cup adhering to a sheet 3 in first and second operating configurations respectively.

Each suction cup comprises a cup 60 supported by a support element 65 and connected to a duct 69 for creating vacuum and/or feeding gaseous fluid (usually air) into the cup 60 to enable/disable the suction cup. Particularly, integral connection of the suction cup with the surface of a sheet 3 is allowed by the negative pressure generated in the cup 60.

In a preferred embodiment, the end portion of the cup 60 terminates with a flexible bellows-like part 61 that can be extended or folded back on itself. Particularly, the flexible bellows-like part 61 is folded back on itself as a result of the negative pressure created in the cup 60 that allows integral connection of the suction cup with the surface of a sheet 3.

Referring to the example as shown in Figure 18a, the flexible bellows-like part 61 is shown in its extended configuration, whereas the example of Figure 18b shows the flexible bellows-like part 61 in its folded configuration. Preferably, the extension of the flexible bellows-like part 61 as it moves from the extended configuration to the folded configuration is from 1 cm to 5 cm.

As shown in the example of Figure 1, at least two of the first suction cups 115 supported by the second post 120 define a first gripper surface P1 at which the suction cups 115 may engage on a portion of the larger surface of the sheet 3 to be handled.

Still referring to the example of Figure 1, the second suction cup 125 supported by the first post 110 defines a second gripper surface P2 at which the suction cups 125 may engage on a portion of the larger surface of the sheet 3 to be handled.

Referring to the preferred embodiment as shown in the example of Figure 1, the frame 100 comprises five first posts m1,m2,m3,m4,m5 each designed to support a corresponding second post n1,n2,n3,n4,n5. Each of the second posts comprises three suction cups 115, which makes up a set of fifteen suction cups. Preferably, the suction pads 115 of this set are coplanar, all of them defining the first pick-up surface P1. In this example, the first pick-up surface P1 is the surface whose apices are substantially defined by a the suction pads 125 located external to other suction pads 115. Particularly, the first pick-up surface P1 is defined by the envelope of the set of suction cups 115 supported by the second posts n1,n2,n3,n4,n5.

Likewise, still referring to the example of Figure 1, each of the five first posts m1,m2,m3,m4,m5 comprises a suction cup 125 which makes up a set of five suction cups. Preferably, the suction pads 125 of this set are coplanar, all of them defining the second pick-up surface P2. In this example, the second pick-up surface P2 is the surface defined by the envelope of the suction cups 125 supported by the first posts m1,m2,m3,m4,m5.

According to one embodiment of the invention, advantageously the second post 120 is reversibly movable relative to the first post 110 so that it may change the inclination of the second post 120 to the first post 110 from at least one first position to a second position.

Particularly, in the first position, the first pick-up surface P1 defined by the first gripper means 115 is inclined to the second pick-up surface P2 defined by the second gripper means 125, whereas in the second position said first pick-up surface P1 is substantially coplanar with the second pick-up surface P2 defined by the second gripper means 125.

As shown in the examples of Figures 2 to 12, in the first position the second post 120 is inclined to the longitudinal direction Z₁ of extension of the first post 110 (see example of Figure 12), whereas in the second position the second post 120 is substantially parallel to the longitudinal direction Z₁ of extension of the first post 110 (see example of Figure 4).

Therefore, this configuration ensures adhesion of all the suction cups 115 to the sheet 3a to be picked up without requiring prior knowledge of the inclination of the sheet 3a to be picked up. This is because the first pick-up surface P1 may be oriented substantially parallel to the surface of the sheet 3a to be picked up.

As shown in the examples of Figures 4 to 8 and 11, in the second position, the first pick-up surface P1 defined by the first gripper means 115 is substantially coplanar with the second pick-up surface P2 defined by the second gripper means 125.

As shown in the examples of Figures 2, 3, 9 and 12, in the first position the free end of the second post 120 is at a distance from the free end of the first post 110 that is greater than the distance reached by the free end of said second post 120 in the second position.

A shown in the example of Figure 12, advantageously the frame 100 comprises hinge means 50 for connecting a first portion 120a of the second post (120) to a first portion 110a of the first post 110.

As shown in the examples of the accompanying figures, the hinge means 50 may be mounted to the first post 110.

Advantageously, the hinge means 50 allow rotation of the second post 120 about an axis of rotation r2 substantially orthogonal, preferably perpendicular to the longitudinal direction Z₁ of extension of the first post 110.

Preferably, the axis of rotation r2 of the hinge means 50 is substantially parallel to the direction of extension of the crossbar 105.

Thus, the second post 120 is movably fixed to a suspension point placed substantially at the center of rotation of the hinge means 50 and subject to gravitational attraction. Preferably in the first position, the action of gravity on the second post 120 causes the second post 120 to have a substantially vertical orientation, orthogonal to a horizontal plane of installation of the apparatus 1 in a warehouse.

In one embodiment, the hinge means 50 are idle hinge means.

In a further embodiment, the hinge means 50 move the second post 120 by actuator means, preferably motor-driven actuator means (not shown). Therefore, the actuator means are adapted to move the second post 120 relative to the first post 110 from at least the first position to the second position.

In one embodiment, the first portion 110a of the first post 110 is an end portion of the first post 110.

In one embodiment, the first portion 120a of the second post 120 is an end portion of the second post 120.

As shown in the example of Figure 3, the first post 110 is connected to the crossbar 105 at its first end portion 110a.

In one arrangement, each first post 110 projects out of the crossbar 105 at the first end portion 110a.

In a preferred embodiment, the first gripper means 115 are located substantially near the first portion 120a of the second post 120 and near a second portion 120b of the second post 120 respectively. Particularly, the second portion 120b of the second post 120 is a portion distal from the first portion 120a of the second post 120.

In one arrangement, the first portion 120a of the second post 120 is the portion located above said second portion 120b. In short, with respect to the plane of installation of the apparatus 100, the first portion 120a is the upper potion of the second post 120, whereas the second portion 120b is the lower portion of the second post 120.

In one arrangement, the first portion 120a is the portion of the second post 120 located at a shorter distance from the post 105 than the second portion 120b.

As used hereinafter and in the annexed claims, the term "distal portion" designates the end portion situated at the longest distance from a conventional origin which, in the preferred embodiment of the example of Figure 2, is the portion situated substantially at the point where the hinge means 50 are mounted to the posts 110, 120.

In a preferred embodiment, the hinge means 50 are situated substantially at the end portion 110a of the first post 110 projecting out of the crossbar 105. With this configuration, the apparatus of the invention allows the first post 110 to adequately compensate for the stresses caused by the weight of the sheet held by the second post 120, thereby reducing the oscillations of the first post 110. The resultant moment of force on the post 110 with respect to the point of attachment given by the hinge means 50 is smaller than the resultant moment on the same post 110 if the point of attachment is placed in the distal portion of the second post opposite to the end portion 110a.

In one arrangement, the first gripper means 115 and the second gripper means 125 are located below the hinge means 50 with respect to the crossbar 105.

In a preferred embodiment, the second gripper means 125 are situated at least at a second portion 110bof the first post 110 distal from the first portion 110a of the first post 110. Preferably, the second portion 110b of the first post 110 is an end portion of the first post 110. Preferably, the second portion 110b is the free end portion of the first post 110.

In one arrangement, the first portion 110a of the first post 110 is the portion located above said second portion 110b.

In one arrangement, the first portion 110a is the portion of the first post 110 located at a shorter distance from the post 105 than the second portion 110b. In short, with respect to the plane of installation of the apparatus 100, the first portion 110a is the upper potion of the first post 110, whereas the second portion 110b is the lower portion of the first post 110.

In one embodiment, the second post 120 is supported by the first post 110 in a retracted position relative to the first pick-up surface P1, i.e. the first gripper means 115.

Preferably, the second post 120 is supported in such a manner as to be in perfect alignment with the first post 110 before the first post 110 with reference to the first pick-up surface P1, i.e. the first gripper means 115.

In one embodiment, the second post 120 is placed between the first post 110 and the first pick-up surface P1.

As shown in the example of Figure 1, the frame 100 comprises a plurality of first posts 110 extending from the crossbar 105, each supporting a second post 120 to define a comb-like arrangement.

In one embodiment, the apparatus 1 for handling glass sheets 3 comprises sensor means 80 adapted to emit an electric signal as a function of the inclination of the second post 120 to the first post 110. Particularly, as shown in the example of Figure 2, the sensor means 80 include at least one tracer fixed to the first post 110. In one embodiment, the sensor means are located substantially at the second portion 120b of the second post 120.

The sensor means 80 are adapted to determine the first position and the second position of the second post 120.

In the preferred embodiment, when the second post 120 is oriented in the first position, the sheet 3 is in a position in which it does not contact the sensor means 80 whereas, when the second post 120 is oriented in the second position, the sheet 3 is in a position in which it contacts the sensor means 80.

Thus, the first and second positions of the second post 120 may be reliably determined and hence, particularly referring to the handling steps for laying down a sheet 3b, the apparatus of the present invention can determine the position of the outermost sheet 3 stored on the support means 6 even when the apparatus 1 is carrying and holding a sheet 3 to be laid down.

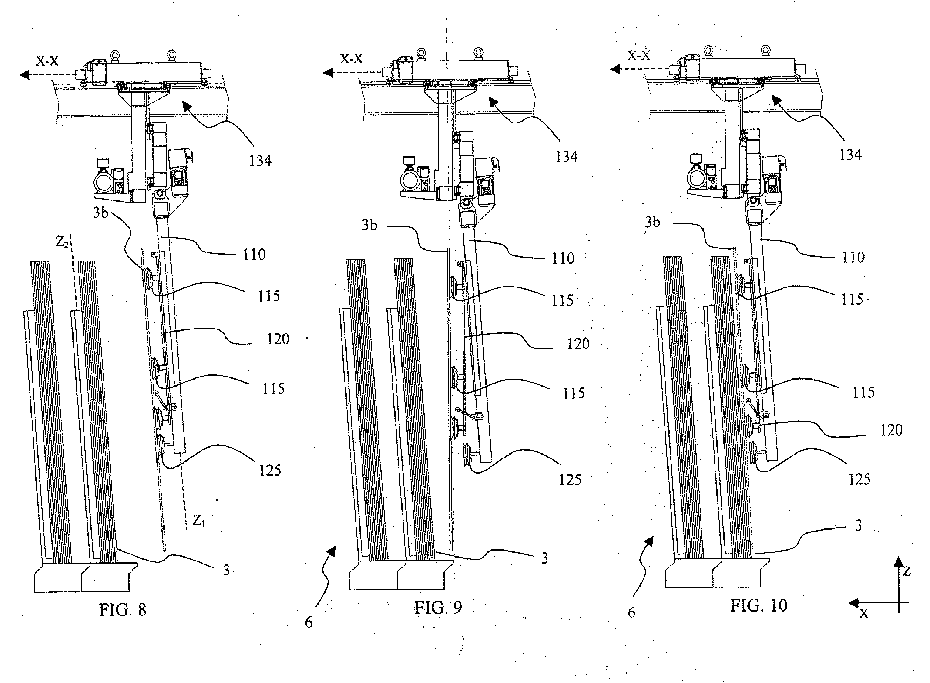

Referring to the examples of Figures 9 and 10, as the apparatus 1 comes close to the support means 6, the second post 120 changes its inclination to the first post 110 from a first position to a second position because the sheet to be laid down 3b changes its inclination under the force exerted upon contact of the sheet 3b to be laid down with the outermost sheet 3 stored in the support means 6.

Obviously, according to further embodiments, the sensor means 80 may include other types of sensors adapted to determine the positions of the second post 120, such as photocells or photosensors. In one embodiment, the sensor means are adapted to determine the position of the second post 120 relative to the first post 110 at each instant of time.

In one embodiment of the invention, the apparatus 1 comprises compressor means for creating vacuum and/or feeding fluid, particularly gaseous fluid, such as air. The compressor means are in fluid communication with valve means. The valve means include a plurality of valves in fluid communication with the suction cups 115, 125. A control unit (e.g. a PLC-based unit) coupled to the valves may be used to enable or disable negative pressure in the glass sheet gripping suction cups 115, 125. Advantageously, negative pressure may be selectively created for each suction cup 115, 125 or for sets of suction cups. Thus, for instance by enabling a set of at least 2 suction cups, glass sheets of different sizes may be handled, as needed.

An example will be now described concerning a first operation of the apparatus of the present invention, related to the steps for picking up a sheet 3, with reference to Figures 2 to 7. Particularly, the pick-up method described below includes pick-up steps in which the apparatus 1 is designed to pick up a sheet from the front, i.e. by adhesion of the gripper means 115, 125 to the surface opposite to the one that lies on an underlying sheet 3 or directly against the back 6a of a support means 6.

As shown in Figure 2, from a condition in which at least one sheet 3 is supported by the support means 6, the pick-up method comprises the steps of:
a) providing the apparatus 1,
b) moving the frame 100 substantially close to the support means 6,
c) placing the first post 110 in a position in which it extends in a longitudinal direction Z₁ in a predetermined orientation relative to the surface of the sheet 3a to be picked up, and
d) placing the second post 120 in a first position in a predetermined orientation relative to said longitudinal direction Z₁ of extension of the first post 110.

In the preferred embodiment, the step c) of placing the first post 110 in a predetermined orientation relative to the surface of the sheet 3a to be picked up may include the step of:
c1) placing the first post 110 in an inclined orientation relative to the vertical direction Z-Z.

Particularly, the step c1) of placing the first post 110 in an inclined orientation relative to the vertical direction comprises the step of:
c2) placing the first post 110 in an orientation from 0 degrees to ±10 degrees relative to the vertical direction Z-Z (referring to the ideal reference Cartesian system Y-Z as shown in Figures 2 to 7)

As shown in the examples of Figures 2 and 3, the step d) of placing the second post 120 in a first position in a predetermined orientation relative to the longitudinal direction Z₁ of extension of the first post 110 may comprise the step of:
d1) placing the second post 120 in an inclined orientation relative to the longitudinal direction Z₁ of extension of the first post 110.

Preferably, the step d1) of placing the second post in an inclined orientation relative to the longitudinal direction Z₁ of extension of the first post 110 may be followed by the step of:
d2) causing the second post 120 to oscillate by gravity.

As shown in the examples of Figures 2 and 3, the second post 120 is placed in a first position in an orientation substantially orthogonal, preferably vertical, to the plane of installation of the apparatus 1 in the warehouse.

After the step d) of placing the second post 120 in a first position in a predetermined orientation relative to the longitudinal direction of extension of the first post 110, the frame 100 of the apparatus 1 is moved forward by the motor-driven carriage 134 toward the support means 6, as shown in Figures 2 and 3.

Then, as shown in the examples of Figures 3 and 4, the method for picking up the sheets according to the invention comprises the step of:
e) causing the first gripper means 115 supported by the second post 120 to adhere to the sheet 3a to be picked up.

The step e) of causing adhesion of the first gripper means 115 may be followed by the step of:
f) changing the inclination of the second post 120 to the first post 110 from the first position to a second position.

Particularly, the step e) of causing adhesion of the first gripper means 115 supported by the second post 120 comprises the steps of:
e1) causing adhesion of the first gripper means 115 placed substantially proximate to the second portion 120b of the second post 120 (see Figure 3) and such step e1) may be followed by the step of:
e2) causing adhesion of the first gripper means 115 placed substantially proximate to the first portion 120a of the second post 120 (see Figure 4).

As shown in the example of Figure 4, the step f) of changing the inclination of the second post 120 to the first post 110 from the first position to a second position comprises the step of:
d) placing the second post 120 in a second position in an orientation substantially parallel to the first post 110.

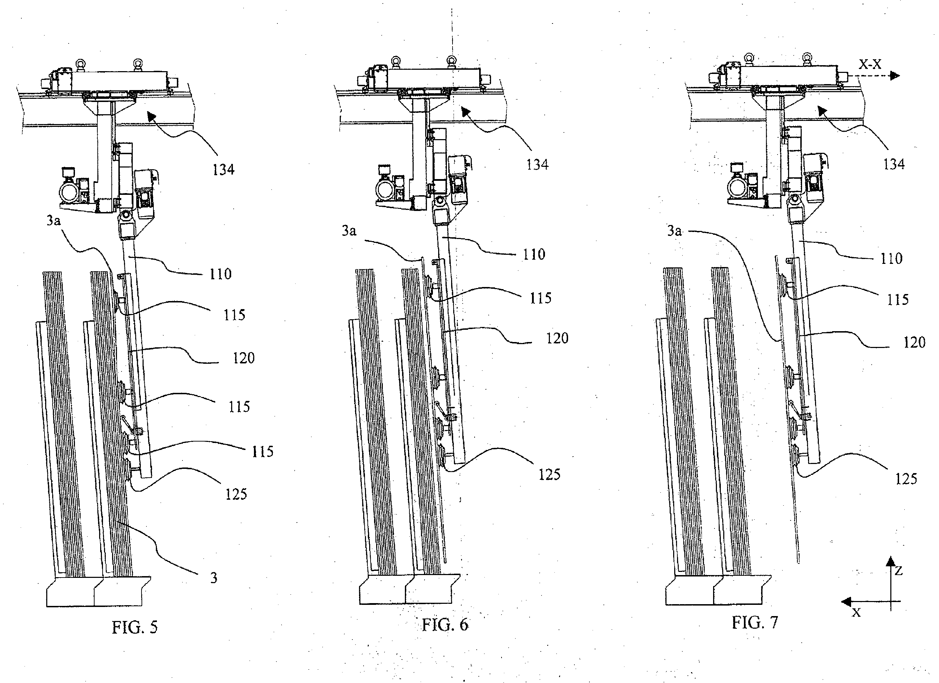

The step f1) of placing the second post 120 in a second position may be followed by the step of:
f2) creating a negative pressure in the first gripper means 115 placed substantially proximate to the first portion 120a of the second post 120 to integrally connect the first gripper means 115 placed substantially proximate to the first portion 120a to the surface of the sheet 3a to be picked up (see Figure 5). This is followed by the step of:
f3) drawing the free end portion of the sheet 3a to be picked up away from the support means 6 or any other sheets stored on the support means 6.

Concerning the packs of sheets 4 stored on the support means 6, it shall be noted that the surfaces of two perfectly adjacent and parallel sheets are always subject to a predetermined force of adhesion, because there is substantially no air volume between the surfaces of two contiguous sheets.

Due to the above, in order to draw one sheet away from the one adjacent to it, a pick-up force shall be exerted (by the first gripper means 115) which is greater than the force of adhesion between the two sheets, otherwise such drawing force shall be applied at peripheral areas of the sheet to be drawn, so that the inherent elasticity of such sheet to be drawn may be utilized cause air to infiltrate between the two adjacent sheets.

According to the present invention, this adhesion problem is solved by causing negative pressure to be first created in the suction cups in the first gripper means 115 located substantially proximate to the first portion 120a of the second post 120.

Referring to the example of Figure 5, the step f3) of drawing the free end portion of the sheet 3 may be followed by the step of:
f4) creating a negative pressure in the first gripper means 115 placed substantially proximate to the second portion 120b of the second post 120 to integrally connect the first gripper means 115 placed substantially proximate to the second portion 120b to the surface of the sheet 3a to be picked up.

Referring to the example of Figure 5, said step f) of changing the inclination of the second post 120 to the first post 110 from the first position to a second position may be followed by the steps of:
g) moving the frame 100 vertically upwards in the vertical direction Z-Z and
h) creating a negative pressure in the second gripper means 125 to integrally connect the second gripper means 125 to the sheet surface 3a, in order to pick up the sheet 3a.

Preferably, the above steps a), b), c), c1), c2), d), d1), d2), e), e1), e2), f), f1), f2), f3), f4), g) and h)are carried out in succession.

It shall be noted that the method of picking up a sheet as described hereinabove is advantageously useful particularly for picking-up a sheet stored on the support means 6 from the front.

An example will be now described concerning a second operation of the apparatus of the present invention, related to the steps for laying down a sheet 3, with reference to Figures 8 to 12. Particularly, the lay-down method described below includes lay-down steps in which the apparatus 1 is designed to lay down a sheet from the front, i.e. by laying the surface of the sheet opposite to the surface directly engaged by the gripper means 115, 125, on a support means 6 or on a surface of a sheet 3 already stored on a support means 6.

As shown in Figure 8, from a starting condition in which a sheet to be laid down 3b is supported and held by the apparatus 1, the method of laying down a sheet comprises the steps of:
aa) moving the frame 100 substantially close to the support means 6, and
bb) placing the first post 110 in a predetermined orientation relative to the longitudinal direction Z₂ of extension of the support means 6.

Particularly, the step bb) of placing the first post 110 in a predetermined orientation may comprise the step of:
bb1) placing the first post 110 in an inclined orientation relative to the vertical direction Z-Z.

Particularly, the step bb1) of placing the first post 110 in an inclined orientation relative to the vertical direction Z-Z may comprise the step of:
bb2) placing the first post 110 in an orientation from 0 degrees to ±10 degrees relative to the vertical direction Z-Z (referring to the ideal reference Cartesian system Y-Z as shown in Figures 8 to 12).

As shown in the example of Figure 9, the step bb) of placing the first post 110 in a predetermined orientation relative to the support means 6 may be followed by the step of:
cc) separating the second gripper means 125, supported by the first post 110, from the sheet 3.

The step cc) of separating the second gripper means 125 from the sheet 3 may be followed by the step of:
dd) changing the inclination of the second post 120 to the first post 110 from at least one first position to a second position.

Particularly, referring to the example of Figure 9, the step dd) of changing the inclination of the second post 120 to the first post 110 from at least one first position to a second position includes placing the second post 120, and hence the sheet 3b to be laid down and held by the apparatus 1, in an orientation substantially vertical to the plane of installation of the apparatus 1. Advantageously, since the second post 120 is free to move under the influence of gravity, the second post 120 can pivot or rotate about the axis of rotation of the hinge means 50 and can place the sheet 3b to be laid down and held by the apparatus in a substantially vertical orientation.

In view of the above, the step dd) of changing the inclination of the second post 120 to the first post 110 from at least one first position to a second position may comprise the steps of:
dd1) placing the second post 120 in an orientation substantially inclined to the direction of extension Z₁ of the first post 110, and/or
dd2) causing the second post 120 to oscillate by gravity, and/or
dd3) placing the first post 110 in an inclined orientation substantially parallel to the vertical direction Z-Z.

Referring to the example of Figure 10, the step dd) of changing the inclination of the second post 120 to the first post 110 from at least one first position to a second position may be followed by the steps of:
ee) causing the sheet 3b to be laid down and held by the apparatus 1 to adhere to the outermost sheet 3 supported by the support means 6 or directly to the back 6a of the support means 6.

Preferably, the step ee) of causing the sheet 3b to be laid down and held by the apparatus 1 to adhere to the outermost sheet 3 supported by the support means 6 may comprise the step of:
ee1) causing the lower portion of the sheet 3b to be laid down and held by the apparatus 1 to adhere to the lower portion of the outermost sheet 3 supported by the support means 6 (or directly to the back 6a of the support means 6).

Conventionally, the lower portion of the sheet 3a, 3b is the surface portion substantially at the free end facing toward the plane of installation of the apparatus 1, whereas the upper portion of the sheet 3a, 3b is the surface portion substantially at a distal end away from the free end facing toward the plane of installation of the apparatus 1.

The step ee) of causing the sheet 3b to be laid down and held by the apparatus 1 to adhere to the outermost sheet 3 supported by the support means 6 may be followed by the step of:
ff) changing the inclination of the second post 120 to the first post 110 from the second position to a first position (see Figure 10).

Then, the frame 100 of the apparatus 1 is moved forward by the motor-driven carriage 134 toward the support means 6.

The step ff) of changing the inclination of the second post 120 to the first post 110 from the second position to the first position may be followed by the step of:
gg) moving the frame 100 vertically downwards to lay the sheet 3a on the support means 6.

Referring to Figures 11 and 12, the step gg) of moving the frame 100 vertically downwards to lay the sheet 3a on the support means 6 may be followed by the step of:
hh) separating the first gripper means 115 supported by the second post 110 from the sheet 3 to lay down the sheet 3 on the support means 6.

Preferably, the above steps aa), bb), bb1), bb2), cc), dd), dd1), dd2), dd3), ee), ee1), ff), gg) and hh) are carried out in succession.

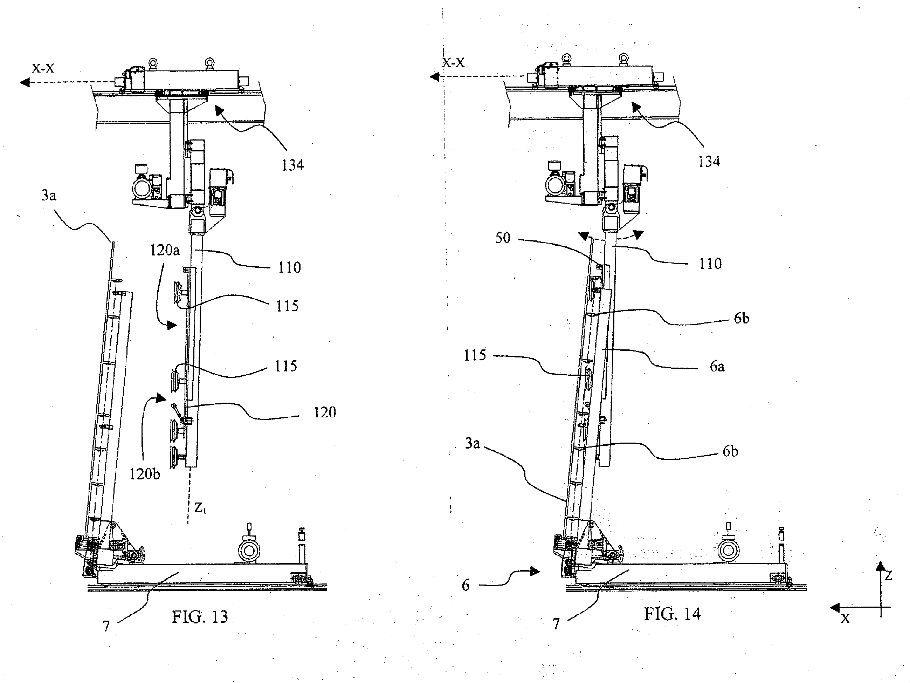

An example will be now described concerning a third operation of the apparatus of the present invention, related to the steps for picking up a sheet 3, with reference to Figures 13 to 17. Particularly, the pick-up method described below includes pick-up steps in which the apparatus 1 is designed to pick up a sheet from the rear (e.g. in case of low-emissivity sheets), i.e. by adhesion of the gripper means 115, 125 to the surface designed to lie on the back 6a of a support means 6.

Referring to the examples of Figures 13 to 17, the support means 6 may include typical tilt tables equipped with a comb-like frame having rollers 6b supported by the back 6a. Particularly, the comb-like frame of the support means 6 and the frame 100 of the apparatus 1 are designed to cooperate in interleaved relation.

As shown in Figure 13, the starting condition of the apparatus 1 is substantially similar to the condition described with reference to the front sheet pick-up steps as described in the first operation example.

Therefore, like the first operation, the pick-up method comprises the steps of:
a) providing the apparatus 1,
b) moving the frame 100 substantially close to the support means 6,
c) placing the first post 110 in a position in which it extends in a longitudinal direction Z₁ in a predetermined orientation relative to the surface of the sheet 3a to be picked up, and
d) placing the second post 120 in a first position in a predetermined orientation relative to said longitudinal direction Z₁ of extension of the first post 110.

In the preferred embodiment, the step c) of placing the first post 110 in a predetermined orientation relative to the surface of the sheet 3a to be picked up may include the step of:
c3) placing the first post 110 in an inclined orientation relative to the vertical direction Z-Z.

Particularly, the step c3) of placing the first post 110 in an inclined orientation relative to the vertical direction may be followed by the step of:
c4) placing the first post 110 in an orientation from 0 degrees to ±10 degrees relative to the vertical direction Z-Z (referring to the ideal reference Cartesian system Y-Z as shown in Figures 13 to 16).

As shown in the example of Figures 13, the step d) of placing the second post 120 in a first position in a predetermined orientation relative to the longitudinal direction Z₁ of extension of the first post 110 may comprise the step of:
d3) placing the second post 120 in an orientation parallel to the longitudinal direction Z₁ of extension of the first post 110.

After the step d) of placing the second post 120 in a first position in a predetermined orientation relative to the longitudinal direction of extension of the first post 110, the frame 100 of the apparatus 1 is moved forward by the motor-driven carriage 134 toward the support means 6, as shown in Figures 13 and 14.

Then, the method sheet pick-up method of the invention may comprise the step of:
e) causing the first gripper means 115 supported by the second post 120 to adhere to the sheet 3a to be picked up.

Particularly, the step e) of causing adhesion of the first gripper means 115 supported by the second post 120 may comprise the steps of:
e3) causing adhesion of the first gripper means 115 placed substantially proximate to the first portion 120a of the second post 120 (see Figure 14).

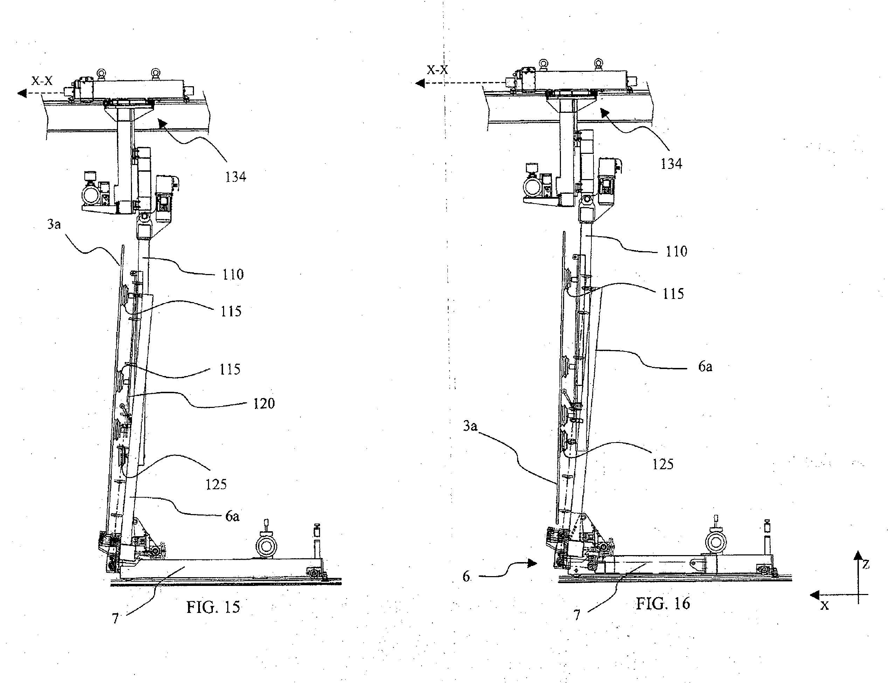

The step e3) of causing adhesion of the first gripper means 115 placed substantially proximate to the first portion 120a of the second post 120 may be preferably followed by the step of:
e4) creating a negative pressure in the first gripper means 115 placed substantially proximate to the first portion 120a of the second post 120 to integrally connect the first gripper means 115 placed substantially proximate to the first portion 120a to the surface of the sheet 3a to be picked up (see Figure 15), and/or
e5) causing the frame 100 of the apparatus 1 to move forward toward the support means 6 to draw the first portion 120a of the surface of the sheet 3a to be picked out away from the back 6a of the support means 6.

In a preferred embodiment, the step e5) of causing the frame 100 of the apparatus 1 to move toward the support means 6 is carried out before the step e4) of creating a negative pressure in the first gripper means 115.

Preferably, the steps e4) and e5) are carried out at the same time.

As shown in the example of Figure 15, the step e) of causing the first gripper means 115 supported by the second post 120 to adhere to the sheet 3a to be picked up may be followed by the step of:
f) changing the inclination of the second post 120 to the first post 110 from the first position to a second position.

It shall be noted that the feature whereby the second post 120 can change its inclination to the first post 110 from the first position to the second position advantageously allows a sheet to be safely picked up from the rear. Referring to Figure 14, during the step e4) the flexible bellows-like part 61 of the suction cups is in its folded configuration as a result of the negative pressure created in the cup 60, that causes integral adhesion between the gripper means 115 and the sheet 3b. Accordingly, the first gripper means 115 exert a force on the sheet 3b, tending to draw the sheet 3b toward the back 6a of the support means 6. Nevertheless, since the movement of the sheet 3b in that direction is prevented by the rollers 6b of the tilt table on which the sheet 3b lies, the second post 120 is adapted to change its inclination, thereby advantageously allowing the first gripper means 115 to be integrally joined to the surface of the sheet 3b. Conversely, without the possibility of changing the inclination of the second post 120 relative to the first post 110 from the first position to the second position, the sheet 3b would be exposed to the risk of breaking under the load exerted by the gripper means 115, because it would be unable to move toward the back 6a.

Preferably, the step f) of changing the inclination of the second post 120 to the first post 110 from the first position to a second position comprises the step of:
f5) placing the second post 120 in a second position in an orientation substantially inclined to the first post 110.

The step f5) of placing the second post 120 in a second position in an orientation substantially inclined to the first post 110 is preferably followed by the step of:
f6) creating a negative pressure in the first gripper means 115 placed substantially proximate to the second portion 120b of the second post 120 to integrally connect the first gripper means 115 placed substantially proximate to the second portion 120b to the surface of the sheet 3a to be picked up (see Figure 15).

Preferably, the steps e4) and e6) may be carried out at the same time.

Referring to the example of Figure 16, the step f) of changing the inclination of the second post 120 to the first post 110 from the first position to a second position may be followed by the step of:
g) moving the frame 100 vertically upwards in to pick up the sheet 3a. Referring to the example of Figure 16, the step g) of moving the frame 100 vertically upwards to pick up the sheet 3a may be followed by the step of:
h) creating a negative pressure in the second gripper means 125 to integrally connect the second gripper means 125 to the sheet surface 3a.

Preferably, the above steps a), b), c), c3), c4), d), d3), e), e3), e4), e5), f), f5), f6), g) and h) are carried out in succession.

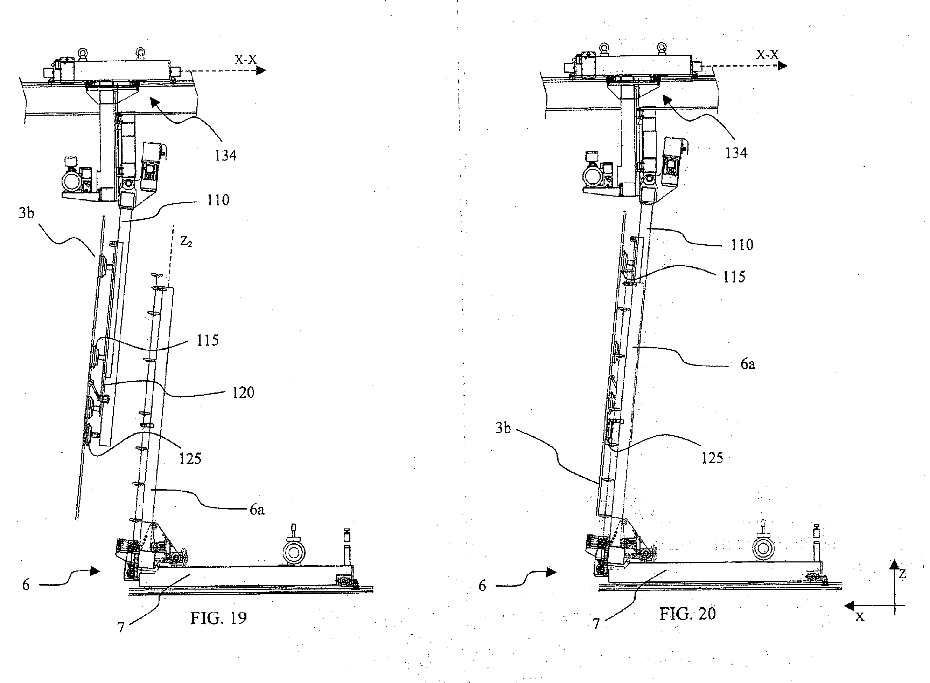

An example will be now described concerning a fourth operation of the apparatus of the present invention, related to the steps for laying down a sheet 3, with reference to Figures 19 to 22. Particularly, the lay-down method _{[SP1]}described below includes lay-down steps in which the apparatus 1 is designed to lay the surface of the sheet directly engaged by the gripper means 115, 125 on a support means 6, particularly on a support means 6 of the tilt table type, designed to be interleaved with the frame 100 of the apparatus 1.

The starting condition of the apparatus 1 is substantially similar to the condition described with reference to the steps for laying down a sheet from the front as described in the second operation example.

Referring to the example of Figure 19, the method of laying down a sheet comprises the steps of:
aa) moving the frame 100 substantially close to the support means 6, and
bb) placing the first post 110 in a predetermined orientation relative to the longitudinal direction Z₂ of extension of the support means 6.

Preferably, the step bb) of placing the first post 110 in a predetermined orientation relative to the longitudinal direction Z₂ of extension of the support means 6 may comprise the step of:
bb3) placing the first post 110 in an inclined orientation relative to the vertical direction Z-Z.

Particularly, the step bb3) of placing the first post 110 in an inclined orientation relative to the vertical direction Z-Z may comprise the step of:
bb4) placing the first post 110 in an orientation from 0 degrees to ±10 degrees relative to the vertical direction Z-Z (referring to the ideal reference Cartesian system Y-Z as shown in Figures 19 to 22).

As shown in the example of Figure 19, the step bb) of placing the first post 110 in a predetermined orientation relative to the longitudinal direction Z₂ of extension of the support means 6 may be followed by the step of:
cc') causing the sheet 3b to be laid down and held by the apparatus 1 to adhere to the support means 6.

The step cc') of causing the sheet 3b to be laid down and held by the apparatus 1 to adhere to the support means 6 may include the step of:
cc'1) causing the sheet 3b to be laid down and held by the apparatus 1 to adhere to the rollers 6b supported by the back 6a of the support means 6.

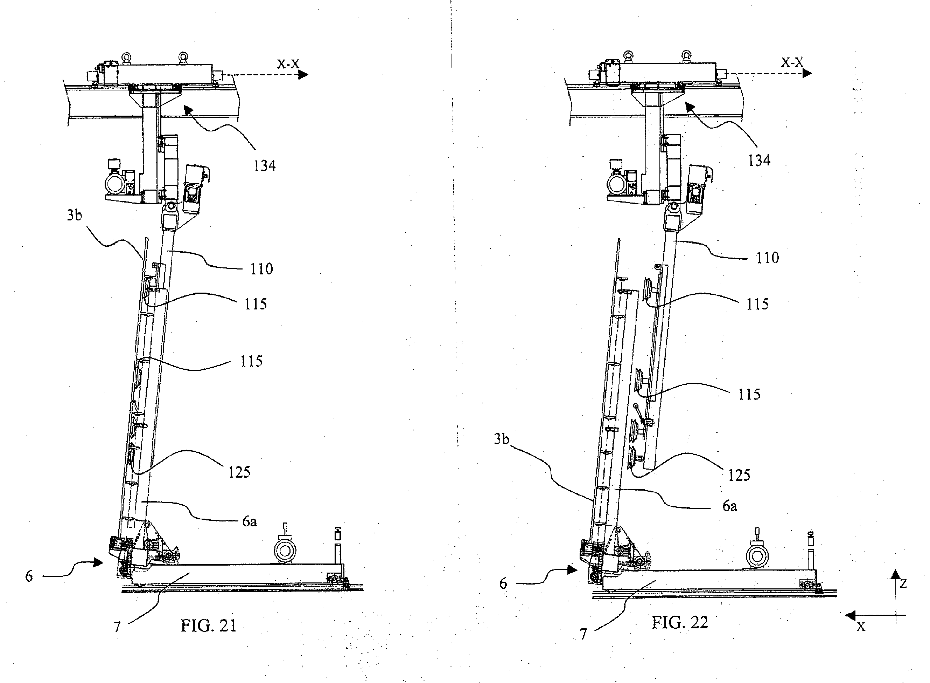

Referring to the example of Figure 21, the step cc') of causing the sheet 3b to be laid down and held by the apparatus 1 to adhere to the support means 6 may be followed by the step of:
dd') moving the frame 100 vertically downwards to lay the sheet 3a on the support means 6.

Now, as shown in Figure 22, there will be the step of:
ee') separating the first 115 and second 125 gripper means from the sheet 3 to lay down the sheet 3 on the support means 6.

Preferably, the above steps aa), bb), bb3), bb4), cc'), cc'1), dd'), ee') are carried out in succession.

As clearly shown in the above description, the apparatus for handling glass sheets and the sheet pick-up/lay-down method of the present invention fulfill the needs and obviate the prior art drawbacks as set out in the introduction of this disclosure.

Those skilled in the art will obviously appreciate that a number of changes and variants may be made to the apparatus for handling glass sheets and the sheet pik-up/lay-down method of the invention as described hereinbefore to meet specific needs, without departure from the scope of the invention, as defined in the following claims.

## Claims

1. An apparatus (1) for handling large flat glass sheets (3), comprising:
- a frame (100) capable of moving relative to support means (6) for at least one sheet and comprising a crossbar (105) with at least one first post (110) projecting therefrom and which extends longitudinally, the free end (110b) of said first post (110) being situated below said crossbar (105),
- handling means (130) for handling and orienting said frame (100) to set the position of said frame (100) against the larger surface of said sheet (3),
- a second post (120) supported by at least one first post (110) and comprising first gripper means (115) which define a first pick-up surface (P1) and are designed to engage and removably hold said sheet (3),
**characterized in that** said at least one first post (110) is connected to said crossbar (105) at its end portion (110a),
and **in that** said apparatus (1) also comprises:
- hinge means (50) for connecting a first portion (120a) of said second post (120) to said end portion (110a) of said first post (110), the axis of rotation of said hinge means (50) being parallel to the direction of extension of said crossbar (105), wherein said second post (120) is reversibly movable with respect to said at least one post (110) so that it may change the inclination of said second post (120) with respect to said first post (110) from at least one first position to a second position.

2. An apparatus (1) as claimed in claim 1, wherein said at least one first post (110) comprises second gripper means (125) which define a second pick-up surface (P2) and are designed to engage and removably hold said sheet (3).

3. An apparatus (1) as claimed in claim 2 wherein, in said first position, said first pick-up surface (P1) defined by said first gripper means (115) is inclined with respect to said second pick-up surface (P2) defined by said second gripper means (125), in said second position said first pick-up surface (P1) being coplanar with said second pick-up surface (P2).

4. An apparatus (1) as claimed in any preceding claim from 1 to 3 wherein, in said first position, the free end of said second post (120) is at a distance from the free end of said at least one first post (110) that is greater than the distance reached by the free end of said second post (120) in said second position.

5. An apparatus (1) as claimed in claim 1, wherein said first portion (120a) of said second post (120) is an end portion of said second post (120).

6. An apparatus (1) as claimed in any claim from 1 to 6 5, wherein said first gripper means (115) are located close to said first portion (120a) of said second post (120) and, respectively, close to a second portion (120a) of said second post (120), said second portion (120b) being an end portion distal from said first portion (120a).

7. An apparatus (1) as claimed in claim 2, wherein said second gripper means (125) are located at least at a second portion (110b) of said first post (110) distal from said first portion (110a) of said first post (110).

8. An apparatus (1) as claimed in claim 7, wherein said portion distal from said first portion (110a) of said first post (110) is an end portion of said first post (110).

9. An apparatus (1) as claimed in any one of claims 1 to **8,** wherein said handling means (130) comprise:
- a motor-driven carriage (134) sliding on rails (8) mounted in a magazine and extending in a direction of extension of the magazine, said motor-driven carriage (134) being adapted to translate said frame (100) in a translation direction parallel to said direction of extension of the magazine,
- hinge means (40) supported by said motor-driven carriage (134) and adapted to rotate said frame (100) about an axis of rotation parallel to said direction of translation.

10. A method for picking up glass sheets, wherein at least one sheet (3) is supported by support means (6), said method comprising the steps of:
- providing an apparatus (1) for handling sheets (3) according to claim 1,
- moving said frame (100) close to said support means (6),
- placing said first post (110) in a predetermined orientation relative to the surface of said sheet (3) to be handled,
- placing said second post (120) in a first position with a predetermined orientation relative to said longitudinal direction of extension of said first post (110),
- causing said first gripper means (115) to adhere to said sheet to pick up said sheet (3) from said support means (6);
- changing the inclination of said second post (120) to said first post (110) from at least one first position to a second position.

11. A method for laying down glass sheets, wherein a sheet (3) is supported by an apparatus (1) for handling sheets (3) according to claim 1 and 2,
said method including the steps of:
- moving said frame (100) close to support means (6) for sheets (3),
- placing said first post (110) in a predetermined orientation relative to said support means (6),
- separating said second gripper means (125) from said sheet (3),
- changing the inclination of said second post (120) to said first post (110) from at least one first position to a second position,
- separating said first gripper means (115) supported by said second post (110) from the sheet (3) to lay down said sheet (3) onto said support means (6).

## Patentansprüche

1. Vorrichtung (1) zum Handhaben von großen flachen Glasscheiben (3), umfassend:
- ein Gestell (100), das sich relativ zu Tragmitteln (6) für mindestens eine Scheibe bewegen kann und einen Querbalken (105) mit mindestens einer ersten Stütze (110) umfasst, die davon vorsteht und sich in Längsrichtung erstreckt, wobei das freie Ende (110b) dieser ersten Stütze (110) unter dem Querbalken (105) angeordnet ist,
- Handhabungsmittel (130) zum Handhaben und Ausrichten des Gestells (100) zum Einstellen der Position des Gestells (100) im Vergleich zur größeren Fläche der Scheibe (3),
- eine zweite Stütze (120), die von mindestens einer ersten Stütze (110) getragen wird und erste Greifermittel (115) umfasst, die eine erste Aufnahmefläche (P1) definieren und gestaltet sind, um mit der Scheibe (3) in Eingriff zu kommen und sie lösbar zu halten,
**dadurch gekennzeichnet, dass** die mindestens eine erste Stütze (110) mit dem Querbalken (105) an ihrem Endabschnitt (110a) verbunden ist,
und dadurch, dass die Vorrichtung (1) außerdem Folgendes umfasst:
- Gelenkmittel (50) zum Verbinden eines ersten Abschnitts (120a) der zweiten Stütze (120) mit dem Endabschnitt (110a) der ersten Stütze (110), wobei die Drehachse dieser Gelenkmittel (50) parallel zur Ausdehnungsrichtung des Querbalkens (105) ist,
wobei die zweite Stütze (120) gegenüber der mindestens einen Stütze (110) derart reversibel beweglich ist, dass sich die Neigung der zweiten Stütze (120) gegenüber der ersten Stütze (110) von mindestens einer ersten Stellung nach einer zweiten Stellung ändern kann.

2. Vorrichtung (1) nach Anspruch 1, wobei die mindestens eine erste Stütze (110) zweite Greifermittel (125) umfasst, die eine zweite Aufnahmefläche (P2) definieren und gestaltet sind, um mit der Scheibe (3) in Eingriff zu kommen und sie lösbar zu halten.

3. Vorrichtung (1) nach Anspruch 2, wobei die erste Aufnahmefläche (P1), die von den ersten Greifermitteln (115) definiert wird, in der ersten Stellung gegenüber der zweiten Aufnahmefläche (P2), die von den zweiten Greifermitteln (125) definiert wird, geneigt ist, wobei die erste Aufnahmefläche (P1) in der zweiten Stellung komplanar mit der zweiten Aufnahmefläche (P2) ist.

4. Vorrichtung (1) nach einem der vorhergehenden Ansprüche von 1 bis 3, wobei sich das freie Ende der zweiten Stütze (120) in der ersten Stellung in einem Abstand vom freien Ende der mindestens einen ersten Stütze (110) befindet, der größer als der Abstand ist, der von dem freien Ende der zweiten Stütze (120) in der zweiten Stellung erreicht wird.

5. Vorrichtung (1) nach Anspruch 1, wobei der erste Abschnitt (120a) der zweiten Stütze (120) ein Endabschnitt der zweiten Stütze (120) ist.

6. Vorrichtung (1) nach einem der Ansprüche von 1 bis 5, wobei die ersten Greifermittel (115) nahe dem ersten Abschnitt (120a) der zweiten Stütze (120) beziehungsweise nahe einem zweiten Abschnitt (120a) der zweiten Stütze (120) angeordnet sind, wobei dieser zweite Abschnitt (120b) ein vom ersten Abschnitt (120a) entfernt liegender Endabschnitt ist.

7. Vorrichtung (1) nach Anspruch 2, wobei die zweiten Greifermittel (125) mindestens bei einem zweiten Abschnitt (110b) der ersten Stütze (110) entfernt vom ersten Abschnitt (110a) der ersten Stütze (110) angeordnet sind.

8. Vorrichtung (1) nach Anspruch 7, wobei der entfernt vom ersten Abschnitt (110a) der ersten Stütze (110) liegende Abschnitt ein Endabschnitt der ersten Stütze (110) ist.

9. Vorrichtung (1) nach einem der Ansprüche von 1 bis 8, wobei die Handhabungsmittel (130) Folgendes umfassen:
- einen motorgetriebenen Schlitten (134), der auf Schienen (8) gleitet, die in ein Magazin eingebaut sind und in einer Ausdehnungsrichtung des Magazins verlaufen, wobei dieser motorgetriebene Schlitten (134) geeignet ist, das Gestell (100) in einer zur Ausdehnungsrichtung des Magazins parallelen Verschieberichtung zu verschieben,
- Gelenkmittel (40), die von dem motorgetriebenen Schlitten (134) getragen werden und geeignet sind, um das Gestell (100) um eine zur Verschieberichtung parallele Drehachse zu drehen.

10. Verfahren zum Aufnehmen von Glasscheiben, wobei mindestens eine Scheibe (3) von Tragmitteln (6) getragen wird, wobei dieses Verfahren die folgenden Schritte umfasst:
- Bereitstellen einer Vorrichtung (1) zum Handhaben von Scheiben (3) nach Anspruch 1,
- Bewegen des Gestells (100) in die Nähe der Tragmittel (6),
- Anordnen der ersten Stütze (110) mit einer vorbestimmten Ausrichtung relativ zur Oberfläche der zu handhabenden Scheibe (3),
- Anordnen der zweiten Stütze (120) in einer ersten Stellung mit einer vorbestimmten Ausrichtung relativ zur Längsausdehnungsrichtung der ersten Stütze (110),
- Veranlassen der ersten Greifermittel (115), an der Scheibe anzuhaften, um diese Scheibe (3) von den Tragmitteln (6) aufzunehmen,
- Ändern der Neigung der zweiten Stütze (120) zur ersten Stütze (110) aus mindestens einer ersten Stellung in eine zweite Stellung.

11. Verfahren zum Ablegen von Glasscheiben, wobei eine Scheibe (3) von einer Vorrichtung (1) zum Handhaben von Scheiben (3) nach Anspruch 1 und 2 getragen wird,
wobei dieses Verfahren die folgenden Schritte umfasst:
- Bewegen des Gestells (100) in die Nähe von Tragmitteln (6) für Scheiben (3),
- Anordnen der ersten Stütze (110) mit einer vorbestimmten Ausrichtung relativ zu den Tragmitteln (6),
- Lösen der zweiten Greifermittel (125) von der Scheibe (3),
- Ändern der Neigung der zweiten Stütze (120) zur ersten Stütze (110) aus mindestens einer ersten Stellung in eine zweite Stellung,
- Lösen der ersten Greifermittel (115), die von der zweiten Stütze (110) getragen werden, von der Scheibe (3), um diese Scheibe (3) auf den Tragmitteln (6) abzulegen.

## Revendications

1. Appareil (1) pour la manipulation de grandes plaques de verre plates (3), comprenant :
- un châssis (100) capable de mouvement par rapport à des moyens de support (6) pour au moins une plaque et comprenant une traverse (105) avec au moins un premier montant (110) faisant saillie de celle-ci et qui s'étend longitudinalement, l'extrémité libre (110b) dudit premier montant (110) étant située au-dessous de ladite traverse (105),
- des moyens de manipulation (130) pour manipuler et orienter ledit châssis (100) pour fixer la position dudit châssis (100) contre la grande surface de ladite plaque (3),
- un deuxième montant (120) supporté par au moins un premier montant (110) et comprenant des premiers moyens de préhension (115) qui définissent une première surface de prise (P1) et sont conçus pour engager et tenir de manière détachable ladite plaque (3),
**caractérisé en ce que** ledit au moins un premier montant (110) est connecté à ladite traverse (105) à sa portion d'extrémité (110a),
et ledit appareil (1) comprend également :
- des moyens d'articulation (50) pour connecter une première portion (120a) dudit deuxième montant (120) à ladite portion d'extrémité (110a) dudit premier montant (110), l'axe de rotation desdits moyens d'articulation (50) étant parallèle à la direction d'extension de ladite traverse (105),
dans lequel ledit deuxième montant (120) est mobile de manière réversible par rapport audit au moins un montant (110) de manière qu'il soit possible de changer l'inclinaison dudit deuxième montant (120) par rapport audit premier montant (110) d'au moins une première position à au moins une deuxième position.

2. Appareil (1) selon la revendication 1, dans lequel ledit au moins un premier montant (110) comprend des deuxièmes moyens de préhension (125) qui définissent une deuxième surface de prise (P2) et sont conçus pour engager et tenir de manière détachable ladite plaque (3).

3. Appareil (1) selon la revendication 2, dans lequel, dans ladite première position, ladite première surface de prise (P1) définie par lesdits premiers moyens de préhension (115) est inclinée par rapport à ladite deuxième surface de prise (P2) définie par lesdits deuxièmes moyens de préhension (125), dans ladite deuxième position, ladite première surface de prise (P1) étant coplanaire avec ladite deuxième surface de prise (P2).

4. Appareil (1) selon une quelconque revendication 1 à 3, dans lequel, dans ladite première position, l'extrémité libre dudit deuxième montant (120) est à une distance de l'extrémité libre dudit au moins un premier montant (110) qui est supérieure à la distance atteinte par l'extrémité libre dudit deuxième montant (120) dans ladite deuxième position.

5. Appareil (1) selon la revendication 1, dans lequel ladite première portion (120a) dudit deuxième montant (120) est une portion d'extrémité dudit deuxième montant (120).

6. Appareil (1) selon une quelconque revendication 1 à 5, dans lequel lesdits premiers moyens de préhension (115) sont situés près de ladite première portion (120a) dudit deuxième montant (120) et, respectivement, près d'une deuxième portion (120a) dudit deuxième montant (120), ladite deuxième portion (120b) étant une portion d'extrémité éloignée de ladite première portion (120a).

7. Appareil (1) selon la revendication 2, dans lequel lesdits deuxièmes moyens de préhension (125) sont situés au moins au niveau d'une deuxième portion (110b) dudit premier montant (110) éloignée de ladite première portion (110a) dudit premier montant (110).

8. Appareil (1) selon la revendication 7, dans lequel ladite portion éloignée de ladite première portion (110a) dudit premier montant (110) est une portion d'extrémité dudit premier montant (110).

9. Appareil (1) selon l'une quelconque des revendications 1 à 8, dans lequel lesdits moyens de manipulation (130) comprennent :
- un chariot motorisé (134) coulissant sur des rails (8) montés dans un entrepôt et s'étendant dans une direction d'extension de l'entrepôt, ledit chariot motorisé (134) étant adapté pour déplacer en translation ledit châssis (100) dans une direction de translation parallèle à ladite direction d'extension de l'entrepôt,
- des moyens d'articulation (40) supportés par ledit chariot motorisé (134) et adaptés pour faire tourner ledit châssis (100) autour d'un axe de rotation parallèle à ladite direction de translation.

10. Procédé pour prélever des plaques de verre, dans lequel au moins une plaque (3) est supportée par des moyens de support (6), ledit procédé comprenant les étapes suivantes :
- la disposition d'un appareil (1) pour la manipulation de plaques (3) selon la revendication 1,
- le déplacement dudit châssis (100) près desdits moyens de support (6),
- le positionnement dudit premier montant (110) dans une orientation prédéterminée par rapport à la surface de ladite plaque (3) à manipuler,
- le positionnement dudit deuxième montant (120) dans une première position avec une orientation prédéterminée par rapport à ladite direction longitudinale d'extension dudit premier montant (110),
- le fait de faire adhérer lesdits premiers moyens de préhension (115) à ladite plaque pour prélever ladite plaque (3) desdits moyens de support (6),
- le changement de l'inclinaison dudit deuxième montant (120) par rapport audit premier montant (110) d'au moins une première position à une deuxième position.

11. Procédé pour déposer des plaques de verre, dans lequel une plaque (3) est supportée par d'un appareil (1) pour la manipulation de plaques (3) selon les revendications 1 et 2,
ledit procédé comprenant les étapes suivantes :
- le déplacement dudit châssis (100) près des moyens de support (6) pour plaques (3),
- le positionnement dudit premier montant (110) dans une orientation prédéterminée par rapport auxdits moyens de support (6),
- la séparation desdits deuxièmes moyens de préhension (125) par rapport à ladite plaque (3),
- le changement de l'inclinaison dudit deuxième montant (120) par rapport audit premier montant (110) d'au moins une première position à une deuxième position,
- la séparation desdits premiers moyens de préhension (115) supportés par ledit deuxième montant (110) par rapport à la plaque (3) pour déposer ladite plaque (3) sur lesdits moyens de support (6).
